# EUROPEAN PATENT SPECIFICATION

(11) **EP 0 558 678 B1**
(45) Date of publication and mention of the grant of the patent: **15.01.1997**
(21) Application number: 92902512.0
(22) Date of filing: 20.11.1991
(51) Int. Cl.: A01B 71/08

(54) **IMPROVEMENTS IN AGRICULTURAL AND OTHER POWERED EQUIPMENT**
LANDWIRTSCHAFTLICHE VORRICHTUNG
AMELIORATIONS RELATIVES A DES EQUIPEMENTS AGRICOLES ET D'AUTRES EQUIPEMENTS A MOTEUR

(30) Priority: 22.11.1990 GB 9025479
(43) Date of publication of application: 08.09.1993
(73) Proprietor: Taylor, William, Coleraine BT51 4PP County Londonderry Northern Ireland (GB)
(72) Inventor: Taylor, William, Coleraine BT51 4PP County Londonderry Northern Ireland (GB)
(74) Representative: Vinsome, Rex Martin
(86) International application number: PCT/GB91/02055
(87) International publication number: WO 92/09189

(56) References cited:
- EP-A- 0 086 606
- CH-A- 475 504
- DE-B- 2 537 601
- US-A- 3 866 440

## Description

### Technical Field

The invention relates to agricultural and other powered equipment, and more particularly to the attachment of a guard located around a power take-off shaft extending for example between a tractor and a towed or mounted accessory or implement.

### Background Art

The specification of my European Patent No. 0086606 discloses a flexible guard suitable for location around a power take-off (PTO) shaft extending between a tractor and a towed accessory or implement. Each of the ends of the flexible guard may comprise an end coupling with hook-shaped clamps which cooperate with a raised lip on the tractor or implement housing. Different tractors and different implements housings tend to have different fixing points for the attachment of connectors and therefore a range of such attachment connectors is required to provide cooperating connector portions, to enable attachments such as guards to be connected thereto.

DE-B-2537601 discloses a coupling device in which a hub is locatable about a power take off shaft of an implement, and a bearing is locatable about the hub. The bearing carries a cylindrical drum to which a bearing support member is attached to prevent the drum from rotation. A guard member covering a universal joint on the PTO shaft is connected to a bearing support member which rests in a trough in the bearing support member.

### Disclosure of Invention

It is an object of the present invention to obviate or mitigate the above disadvantages.

According to an aspect of the invention there is provided a connector means as defined in Claim 1.

According to another aspect of the invention there is provided a connector means as defined in Claim 2.

Preferred embodiments of the invention are defined in claims 3 to 13.

### Brief Description of Drawings

The foregoing and further features of the invention may be more readily understood from the following description of some preferred embodiments thereof, by way of example, with reference to the accompanying drawings, in which :-
Fig. 1 is a perspective view of a female part of a bayonet connector for attachment to a tractor or implement therefor;
Fig.2 is a perspective view similar to Fig. 1 of an alternative embodiment;
Fig.3 is an exploded side elevational view of a connector illustrating additional protective features;
Fig.4 is an exploded side elevational view of a connector provided with an extension shaft;
Fig.5 is an exploded side elevational view of a connector provided with an extension shaft and a rear cover; and
Fig.6 is a side elevational view partly in section of a connector with a side protector for the disc-form member.

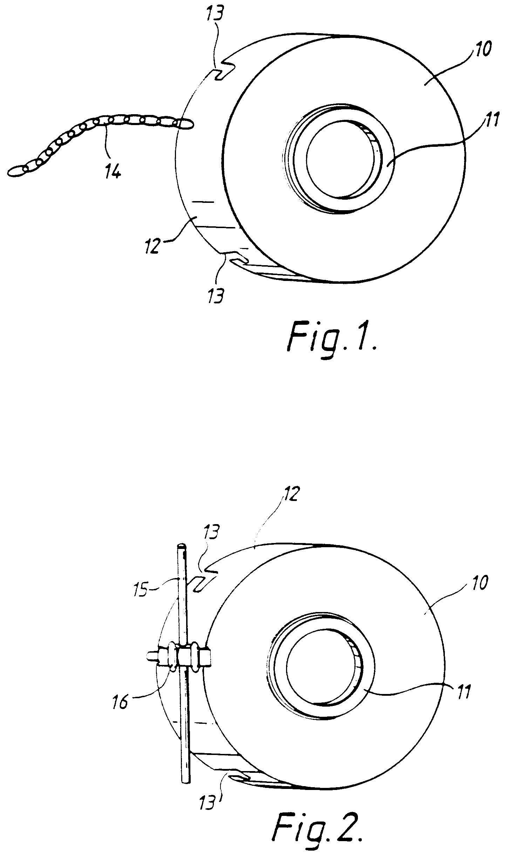

Referring now to Fig.1 of the drawings there is shown an attachment connector part for fitting to a tractor or an implement which is to be powered from the power take-off of the tractor. The connector part comprises a base plate portion 10 which is centrally apertured to accommodate a bearing 11. A cylindrical portion 12 extends from the base plate 10 and is formed with female bayonet-connector slots 13 therearound. A chain 14 is attached to the outer surface of portion 12.

In use, the bearing 11 is located around the output PTO stub of a tractor, or the input PTO stub of an implement, with the cylindrical portion 12 extending outwardly. The chain 14 is then attached to any suitable fixing point on the tractor or implement. The male portion of a bayonet connector located at the end of a guard for the PTO shaft can then be attached to engage within portion 12 with pins thereon engaging within slots 13. The chain 14 prevents rotation of base plate 10 and portion 12, and hence the guard, with bearing 11 allowing normal rotation of the PTO input/output stub.

Fig.2 shows a similar arrangement to that of Fig. 1 except that the chain 14 is replaced by a prop member 15 which is pivotally mounted at 16 to the portion 12. Although the prop member 15 is shown to be mounted to extend tangentially with portion 12 such prop member may alternatively be mounted to extend generally radially therefrom.

In use, the prop member 15 will engage with any adjacent protrusion on the tractor or implement to prevent rotation of plate 10 and portion 12.

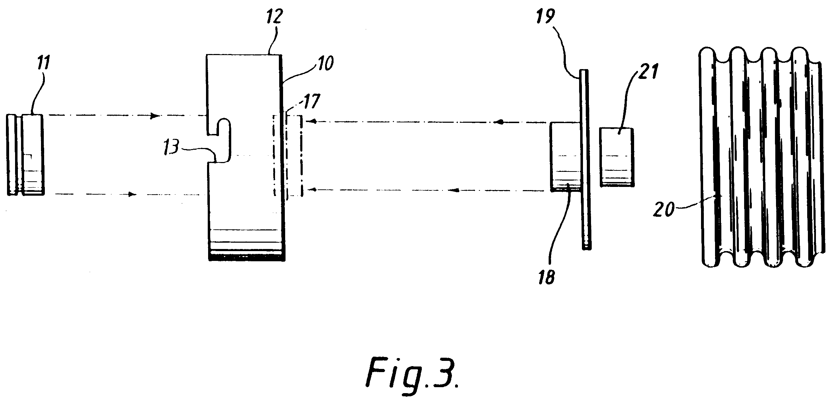

Referring now to Fig.3 there is shown an exploded side elevational view of a connector which may have rotation prevention means such as chain 14 or prop member 15 as shown in Fig. 1 or 2 embodiments. In this arrangement the bearing 11 is retained within a central aperture in base plate 10 by a circlip 17. A disc-form protective insert (not shown) may be located within portion 12 abutting the inner face of plate 10 by the location and fixing of bearing 11. A boss member 18, formed integrally with a disc-form member 19, is located within bearing 11 such that member 19 abuts and protects the rear face of plate 10. The members 18, 19 may be formed of synthetic plastics material, or alternatively formed of metal with the addition of a cylindrical insert 21 of synthetic plastics material. The disc-form member 19 prevents chafing between the rear face of base plate 10 and any bolt heads which may be arranged on the housing of the tractor or implement adjacent the PTO shaft. An expandable, resilient cylindrical member 20 is located around portion 12 so as to extend rearwardly from plate 10. Such an arrangement is for use with external bolt-on conversion stub shafts. The member 20 may be formed of any suitable resilient synthetic plastics or rubber material.

Hence each of the arrangements shown may be attached quickly and easily to any PTO stub without the requirement of any bolt or screw attachments, with their inherent attachment aperture alignment problems which vary from tractor to tractor and with various implements. The use of bolts and screws in appropriate circumstances is not, however, excluded. Although each of the arrangements show a bayonet type fixing any other quick-release fixing may be carried by portion 12 which may then have square or hexagonal cross-section. When it is required to leave the attachment connector located on a tractor or implement when the PTO shaft is not in place, this may be achieved by providing grub screws for firmly locating the bearing 11 on the stub or may be achieved by a dummy yoke end.

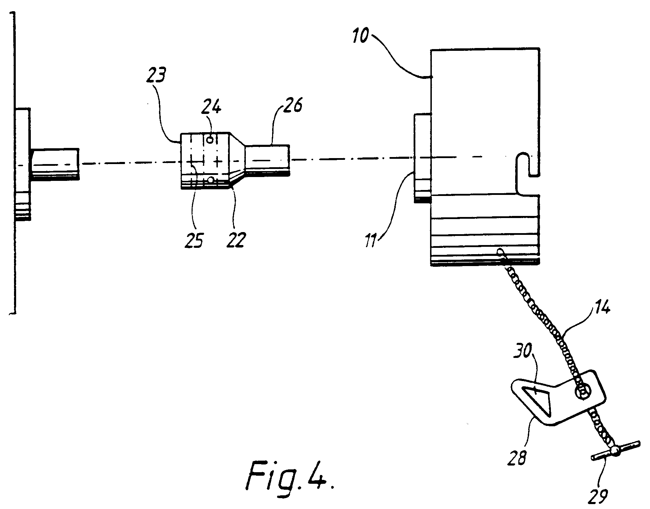

Referring now to Fig.4, this embodiment is of particular use when working with a tractor or implement having a short PTO output/input stub, and mainly applies to older models. In this embodiment the base plate 10 is provided with a bearing 11, which has a central aperture sized to be closely locatable about an extension shaft 22. The extension shaft has a splined sleeve 23 adapted to fit over the PTO output/input stub, and peripherally arranged threaded holes adapted to receive allen screws 24 or an appropriate snap connector will engage with the recess in the splined PTO stub. The extension shaft is thus securely fixed to the PTO stub. The splined sleeve 23 also has external peripheral grooves 25 adapted to receive circlips whereby the bearing 11 can be located and retained on the sleeve. Co-axial and integral with the splined sleeve is a stub extension 26 which is dimensioned so as to engage with the PTO shaft in the normal way. By appropriate placement of the circlips, the bearing 11 can be located on the extension shaft close to the tractor or implement housing, which can obviate the need to provide a disc-form protective member to protect the rear surface of the base plate 10.

Fig. 4 also shows chain means 27 for preventing rotation of the connector in which the chain passes through a hole in an anchor plate 28 and is retained by a bolt 29. The anchor plate has a triangular hole 30 which can fit a variety of bolts of different diameter whereby the anchor plate can be mounted on the tractor or implement housing.

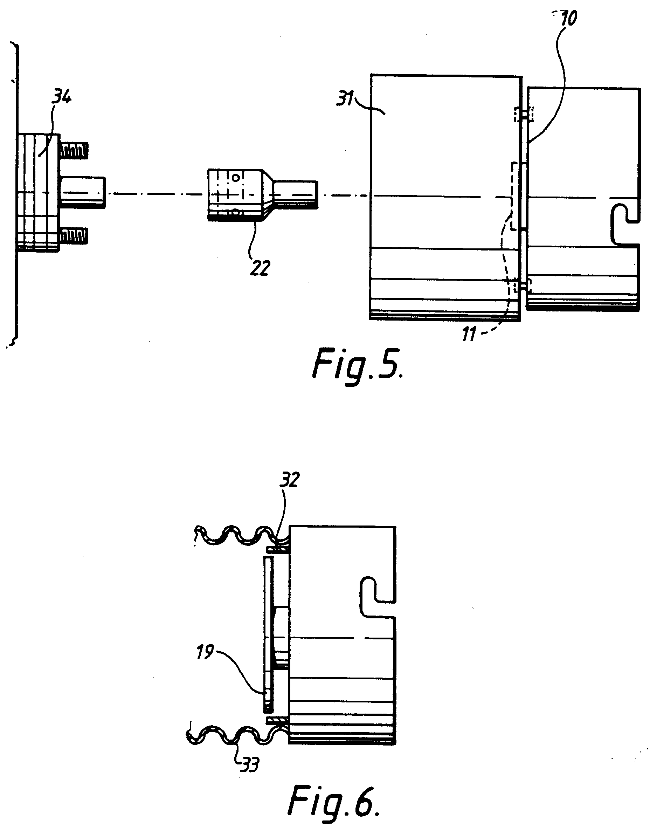

Turning now to Fig. 5, this embodiment finds particular application with implements fitted with large slip clutches around the PTO stub. This embodiment has an extension shaft 22, similar to that of Fig. 4, but is also provided with a rear guard cover 31, of cylindrical shape, which is bolted to the base plate 10. The guard cover 31 is sized so as to extend from the connector base plate 10 over the slip clutch 34, so that it surrounds the slip clutch with its edge adjacent to the implement housing.

Finally Fig. 6 shows a further embodiment in which the connector is provided with a disc-form protective member 19 and a protective collar 32, mounted on the base plate 10, which serves to prevent objects such as the operator's clothing from contacting the rotating edge of the disc-form protective member. The face of the disc-form protective member is slightly proud of the protective collar 32 so as to perform its function of protecting the rear surface of the base plate 10. If desired, the connector may also be provided with a small flexible guard 33.

Although the invention has been described in connection with the attachment of a guard located around a PTO shaft extending between a tractor and an implement it is not to be construed as limited thereto, and for example it may find application in the attachment of guards for lorry or other heavy vehicle prop shafts and PTO shafts.

## Claims

1. A connector means for a PTO or vehicle drive shaft guard attachment, characterised in that the connector means comprises bearing means (11) adapted to be locatable about a PTO output/input stub of a tractor, vehicle or implement and a tubular portion (12) provided with mating means (13) co-operable in use with a further part carried on the attachment to form a mating connection therewith, the arrangement being such that the tubular portion is adapted for mating attachment with the further part.

2. A connector means for a PTO or vehicle drive shaft guard attachment, characterised in that the connector means comprises a base plate portion (10) with a bearing (11) located therein which has a central aperture sized to be closely locatable about a PTO output/input stub of a tractor or implement, the base plate also carrying a tubular portion (12) extending from one face thereof and formed to provide one part of a connector mateable with a further connector part carried on an attachment, to make a connection therewith, the arrangement being such that the tubular portion is adapted for mating attachment with the further connector part, in use, means (14,15) being provided to prevent rotation of the base plate portion (10) and tubular portion (12) with rotation of said output/input stub, in use.

3. A connector means according to Claim 1 or 2, characterised in that it has a tubular portion (12) formed to provide one part of a connector mateable, in use, with a further part carried on an attachment, and in that means (14,15) are provided to prevent rotation of the tubular portion with rotation of said output/input stub, in use, said means comprising a chain (14) attached to the attachment connector means for attachment to the tractor or implement, in use, or comprising a prop member (15) carried on the outer surface of the tubular portion (12) and extending outwardly therefrom with its longitudinal axis transverse to the rotation axis of the bearing (11).

4. A connector means according to any of Claims 1 to 3, characterised in that it has a tubular portion (12) formed to provide one part of a connector mateable, in use, with a further part carried on an attachment, and in that the tubular portion (12) is cylindrical, and slotted in a manner to act as the female portion (13) of a bayonet fitting connector.

5. A connector means according to any of Claims 1 to 4, characterised in that it has a base plate portion (10) with a bearing (11) located therein, and a boss member (18) locatable within the bearing (11), such boss member (18) carrying a disc-form member (19) for locating over and protecting the rear surface of the base plate portion (10).

6. A connector means according to Claim 5, characterised in that it is provided with a protective collar (32), mounted on the base plate portion (10), which serves, in use, to prevent objects from contacting the rotating edge of the disc-form member (19).

7. A connector means according to any of the preceding claims, characterised in that it comprises a base plate portion (10) and a tubular portion (12) formed to provide one part of a connector mateable, in use, with a further part carried on an attachment, and in that it is provided with an expandable, resilient cylindrical member (20) located around the tubular portion (12) so as to extend rearwardly of the base plate portion (10).

8. A connector means according to any of the preceding claims, characterised in that it has a base plate portion (10) and a tubular portion (12), and in that the bearing (11) is anchored within an aperture in the base plate (10), and a disc-form protective insert (19) is located over the surface of the base plate portion (10) within the tubular portion (12).

9. A connector means according to any of the preceding claims, characterised in that it is provided with an extension shaft (22) adapted to extend the PTO output/input stub and to be secured thereto, and in that the bearing (11) has an aperture sized so as to be closely locatable about the extension shaft (22).

10. A connector means according to Claim 9, characterised in that the extension shaft (22) comprises a splined sleeve (23) adapted to fit over the PTO output/input stub and to be secured thereto.

11. A connector means according to Claim 9 or 10, characterised in that the extension shaft (22) is provided with means (25) whereby the bearing can be located and retained thereon.

12. A connector means according to any of the preceding claims, characterised in that it is provided with a rearwardly extending guard cover (31).

13. A connector means according to Claim 12, characterised in that the guard cover (31) is rigid, or resiliently expandable, and is secured to a base plate portion (10).

## Patentansprüche

1. Anschlußmittel für die Halterung einer Schutzeinrichtung für eine Zapfwelle oder eine Fahrzeug-Antriebswelle, **dadurch gekennzeichnet**, daß die Anschlußmittel ein Lager (11), das dazu eingerichtet ist, daß man es um einen Auslaß-/Einlaß-Stutzen eines Zapfwellenantriebs eines Traktors, eines Fahrzeugs oder eines Arbeitsgerätes anbringen kann, und einen rohrförmigen Abschnitt (12) aufweisen, der mit Mitteln (13) versehen ist, die bei Gebrauch mit einem weiteren, auf der Halterung getragenen Teil zur Ausbildung einer Eingriffsverbindung mit diesem in Eingriff bringbar sind, wobei die Anordnung so getroffen ist, daß der rohrförmige Abschnitt zum Befestigungseingriff mit dem weiteren Teil ausgebildet ist.

2. Anschlußmittel für die Halterung einer Schutzeinrichtung für eine Zapfwelle oder eine Fahrzeug-Antriebswelle, **dadurch gekennzeichne**t, daß die Anschlußmittel einen Grundplattenabschnitt (10) mit einem Lager (11) aufweisen, das in diesem angebracht ist und eine zentrale Öffnung umfaßt, die so dimensioniert ist, daß sie fest auf einem Auslaß-/Einlaß-Stutzen eines Zapfwellenantriebs eines Traktors oder eines Arbeitsgerätes angebracht werden kann, wobei die Grundplatte ferner einen rohrförmigen Abschnitt (12) aufweist, der von einer ihrer Seiten aus verläuft und so ausgebildet ist, daß er ein Teil eines Anschlusses bildet, der mit einem weiteren Anschlußteil, das auf einer Halterung getragen wird, in Eingriff bringbar ist, um mit diesem eine Verbindung herzustellen, wobei die Anordnung so getroffen ist, daß der rohrförmige Abschnitt dazu eingerichtet ist, bei Gebrauch in Befestigungseingriff mit dem anderen Anschlußteil zu gelangen, und daß Einrichtungen (14, 15) vorgesehen sind, um im Gebrauch eine Drehung des Grundplattenabschnitts (10) und des rohrförmigen Abschnitts (12) bei einer Drehung des Auslaß-/Einlaß-Stutzens zu verhindern.

3. Anschlußmittel nach Anspruch 1 oder 2, dadurch gekennzeichnet, daß sie einen rohrförmigen Abschnitt (12) aufweisen, der so ausgebildet ist, daß er ein Teil eines bei Gebrauch mit einem weiteren, auf einer Halterung getragenen Teil in Eingreifverbindung bringbaren Teiles ausbildet, und daß Mittel (14, 15) vorgesehen sind, die verhindern, daß eine Drehung des rohrförmigen Abschnitts bei einer Drehung des Auslaß-/Einlaß-Stutzens bei Gebrauch auftritt, wobei diese Mittel eine Kette (14), die an den Halterungs-Anschlußmitteln befestigt ist, um bei Gebrauch eine Befestigung an dem Traktor oder dem Arbeitsgerät zu bewirken, oder ein Stützteil (15) aufweisen, das auf der Außenfläche des rohrförmigen Abschnitts (12) getragen wird und sich von diesem nach außen erstreckt, wobei seine Längsachse quer zu Drehachse des Lagers (11) ist.

4. Anschlußmittel nach einem der Ansprüche 1 bis 3, dadurch gekennzeichnet, daß sie einen rohrförmigen Abschnitt (12) aufweisen, der so ausgebildet ist, daß er ein Teil eines bei Einsatz mit einem weiteren, auf einer Halterung getragenen Teil in Eingriff bringbaren Anschlusses ausbildet, und daß der rohrförmige Abschnitt (12) zylindrisch ausgebildet sowie in einer solchen Weise geschlitzt ist, daß er als der Aufnahmeabschnitt (13) eines Bavonettverschluß-Anschlusses wirkt.

5. Anschlußmittel nach einem der Ansprüche 1 bis 4, dadurch gekennzeichnet, daß sie einen Grundplattenabschnitt (10) mit einem Lager (11), das in diesem angeordnet ist, und ein in dem Lager (11) anbringbares Nabenteil aufweisen, das ein scheibenförmiges Glied (19) zur Anordnung über und zum Schutz der Rückfläche des Grundplattenabschnitts (10) trägt.

6. Anschlußmittel nach Anspruch 5, dadurch gekennzeichnet, daß sie mit einem Schutzbund (32) versehen sind, der auf dem Grundplattenabschnitt (10) befestigt ist und bei Gebrauch dazu dient zu verhindern, daß Gegenstände mit der Drehkante des scheibenförmigen Gliedes (19) in Kontakt gelangen können.

7. Anschlußmittel nach einem der vorausgehenden Ansprüche, dadurch gekennzeichnet, daß sie einen Grundplattenabschnitt (10) und einen rohrförmigen Abschnitt (12) aufweisen, der so ausgebildet ist, daß er ein Teil eines bei Einsatz mit einem weiteren, auf einer Halterung getragenen Teil in Eingriff bringbaren Anschlusses ausbildet, und daß sie mit einem dehnbaren, nachgiebigen, zylindrischen Teil (20) versehen sind, das um den rohrförmigen Abschnitt (12) herum derart angeordnet ist, daß es rückwärts vom Grundplattenabschnitt (10) aus verläuft.

8. Anschlußmittel nach einem der vorhergehenden Ansprüche, dadurch gekennzeichnet, daß sie einen Grundplattenabschnitt (10) und einen rohrförmigen Abschnitt (12) aufweisen, und daß das Lager (11) innerhalb einer Öffnung in Grundplattenabschnitt (10) verankert ist, und daß ein scheibenförmiger Schutzeinsatz (19) über der Oberfläche des Grundplattenabschnitts (10) innerhalb des rohrförmigen Abschnitts (12) angebracht ist.

9. Anschlußmittel nach einem der vorhergehenden Ansprüche, dadurch gekennzeichnet, daß sie mit einem Verlängerungsschaft (22) versehen sind, der zur Verlängerung des Auslaß-/Einlaß-Stutzens des Zapfwellenantriebs und zur Befestigung an diesem dient, und daß das Lager (11) eine Öffnung aufweist, die so dimensioniert ist, daß sie fest auf dem Verlängerungsschaft (22) angebracht werden kann.

10. Anschlußmittel nach Anspruch 9, dadurch gekennzeichnet, daß der Verlängerungsschaft (22) eine Keilhülse (23) aufweist, die dazu eingrichtet ist, daß man sie auf den Auslaß-/Einlaß-Stutzen des Zapfwellenantriebs aufsetzen und an diesem befestigen kann.

11. Anschlußmittel nach Anspruch 9 oder 10, dadurch gekennzeichnet, daß der Verlängerungsschaft (22) mit Mitteln (25) zur Aufnahme und zum Haltern des Lagers auf ihm versehen ist.

12. Anschlußmittel nach einem der vorhergehenden Ansprüche, dadurch gekennzeichnet, daß sie mit einer nach rückwärts ragenden Schutzabdeckung (31) versehen sind.

13. Anschlußmittel nach Anspruch 12, dadurch gekennzeichnet, daß die Schutzabdeckung (31) starr oder nachgiebig-dehnbar ausgebildet und an einem Grundplattenabschnitt (10) befestigt ist.

## Revendications

1. Moyen de connexion pour fixation de garde d'arbre de prise de force (PTO) ou d'arbre moteur de véhicule, caractérisé en ce que le moyen de connexion comprend des moyens de palier (11) susceptibles d'être positionnés autour d'un tronçon d'arbre de sortie/entrée de PTO d'un tracteur, d'un véhicule ou d'un outil et une partie tubulaire (12) pourvue de moyens de raccordement (13) susceptible de coopérer, en service, avec une autre partie portée par la fixation pour former avec elle une connexion de raccordement, l'agencement étant tel que la partie tubulaire soit adaptée au raccordement de la fixation avec l'autre partie.

2. Moyen de connexion pour fixation de garde d'arbre de prise de force (PTO) ou d'arbre moteur de véhicule, caractérisé en ce que le moyen de connexion comprend une partie formant plaque de base (10) dans laquelle est disposé un palier (11) avec une ouverture centrale calibrée de manière à être positionnée étroitement autour d'un tronçon d'arbre de sortie/entrée de PTO d'un tracteur ou d'un outil, la plaque de base portant également une partie tubulaire (12) s'étendant d'une de ses faces et formée de manière à constituer une partie d'un élément de connexion raccordable à une autre partie de connexion portée par une fixation, pour réaliser une connexion avec elle, l'agencement étant tel que la partie tubulaire soit adaptée pour raccorder la fixation à l'autre partie de connexion, en service, des moyens (14, 15) étant prévus pour empêcher la rotation de la partie formant plaque de base (10) et de la partie tubulaire (12) lorsque ledit tronçon d'arbre de sortie/entrée tourne, en service.

3. Moyen de connexion selon la revendication 1 ou 2, caractérisé en ce qu'il présente une partie tubulaire (12) formée pour constituer une partie d'un élément de connexion raccordable, en service, avec une autre partie portée par une fixation, et en ce que des moyens (14, 15) sont prévus pour empêcher la rotation de la partie tubulaire lorsque ledit tronçon d'arbre de sortie/entrée tourne, en service, lesdits moyens comprenant une chaîne (14) fixée au moyen de connexion de la fixation pour monter sur le tracteur ou l'outil, en service, ou comprenant un élément de soutien (15) porté par la surface externe de la partie tubulaire (12) et s'étendant vers l'extérieur depuis celle-ci, son axe longitudinal étant transversal à l'axe de rotation du palier (11).

4. Moyen de connexion selon l'une quelconque des revendications 1 à 3, caractérisé en ce qu'il possède une partie tubulaire (12) formée pour constituer une partie d'un élément de connexion raccordable, en service, avec une autre partie portée sur une fixation, et en ce que la partie tubulaire (12) est cylindrique et fendue de manière à servir de partie femelle (13) d'un élément de connexion à baïonnette.

5. Moyen de connexion selon l'une quelconque des revendications 1 à 4, caractérisé en ce qu'il possède une partie formant plaque de base (10) dans laquelle est disposé un palier, et un élément protubérant (18) qui peut être positionné dans le palier (11), ledit élément protubérant (18) portant un élément (19) en forme de disque susceptible d'être disposé par-dessus la surface arrière de la partie formant plaque de base (10) pour la protéger.

6. Moyen de connexion selon la revendication 5, caractérisé en ce qu'il est pourvu d'un collier protecteur (32), monté sur la partie formant plaque de base (10), qui sert, en service, à empêcher des objets de venir en contact avec le bord rotatif de l'élément (19) en forme de disque.

7. Moyen de connexion selon l'une quelconque des revendications précédentes, caractérisé en ce qu'il comprend une partie formant plaque de base (10) et une partie tubulaire (12) formée pour constituer une partie d'un élément de connexion raccordable, en service, avec une autre partie portée par une fixation, et en ce qu'il est muni d'un élément cylindrique élastique extensible (20) disposé autour de la partie tubulaire (12) de manière à s'étendre vers l'arrière de la partie formant plaque de base (10).

8. Moyen de connexion selon l'une quelconque des revendications précédentes, caractérisé en ce qu'il possède une partie formant plaque de base (10) et une partie tubulaire (12), et en ce que le palier (11) est ancré dans une ouverture de la plaque de base (10), et un élément rapporté protecteur (19) en forme de disque est disposé sur la surface de la partie (formant plaque de base (10) à l'intérieur de la partie tubulaire (12).

9. Moyen de connexion selon l'une quelconque des revendications précédentes, caractérisé en ce qu'il est muni d'un arbre d'extension (22) adapté à étendre le tronçon d'arbre de sortie/entrée de PTO et à être fixé à celui-ci, et en ce que le palier (11) présente une ouverture calibrée de manière à pouvoir être disposée étroitement autour de l'arbre d'extension (22).

10. Moyen de connexion selon la revendication 9, caractérisé en ce que l'arbre d'extension (22) comprend une douille cannelée (23) adaptée à s'ajuster sur le tronçon d'arbre de sortie/entrée de PTO et être fixée à celui-ci.

11. Moyen de connexion selon la revendication 9 ou 10, caractérisé en ce que l'arbre d'extension (22) est pourvu de moyens (25) qui permettent de positionner le palier et de l'y retenir.

12. Moyen de connexion selon l'une quelconque des revendications précédentes, caractérisé en ce qu'il est pourvu d'un couvercle de garde (31) s'étendant vers l'arrière.

13. Moyen de connexion selon la revendication 12, caractérisé en ce que le couvercle de garde (31) est rigide ou extensible de manière élastique et est fixé à une partie formant plaque de base (10).
